# EUROPEAN PATENT APPLICATION

(11) **EP 4 836 171 A1**
(43) Date of publication of application: **04.11.2026**
(21) Application number: 23963168.2
(22) Date of filing: 27.12.2023
(51) Int. Cl.: H01M 50/534, H01M 4/66, H01M 50/536

(54) **LITHIUM SECONDARY BATTERY**

(71) Applicant: TERAWATT TECHNOLOGY K.K., Yokohama-shi, Kanagawa 226-0026 (JP)
(72) Inventor: NAKANO, Masatsugu, Yokohama-shi, Kanagawa 226-0026 (JP)
(74) Representative: FRKelly
(86) International application number: PCT/JP2023/047091
(87) International publication number: WO 2025/141819

(57) **Abstract**

The present invention provides a lithium secondary battery having excellent cycle characteristics and excellent temperature stability of a tab. The present invention relates to a lithium secondary battery including: a laminate including a plurality of positive electrodes, a plurality of separators, and a plurality of negative electrodes; a plurality of positive electrode tab lead portions extending from the laminate; and a positive electrode tab joined to the plurality of positive electrode tab lead portions, in which the positive electrode tab lead portion is a lead portion in which a positive electrode current collector constituting the positive electrode extends from the laminate, the positive electrode tab lead portion and the positive electrode current collector include a resin layer and an aluminum layer formed on both surfaces of the resin layer, in a 2θ pattern of an X-ray diffraction measurement of the aluminum layer, there is a peak A at least at 38.0° or more and 39.0° or less, a ratio (B/A) of an intensity of a peak B at 44.0° or more and 45.0° or less to an intensity of the peak A is 0.4 or less, and a half-value width of the peak A is 0.4° or less.

## Description

### Technical Field

The present invention relates to a lithium secondary battery.

### Background Art

In recent years, a technique of converting natural energy such as sunlight or wind power into electrical energy has attracted attention. In association with this, various secondary batteries have been developed as a power storage device which has high safety and can store a large amount of electrical energy.

Among these, it is known that a lithium secondary battery that carries out charging/discharging by moving lithium ions between a positive electrode and a negative electrode exhibits a high voltage and a high energy density. As a typical lithium secondary battery, a lithium-ion secondary battery (lithium-ion battery: LIB) is known, which has an active material capable of holding a lithium element in a positive electrode and a negative electrode, and carries out charging/discharging by transferring lithium ions between the positive-electrode active material and the negative-electrode active material.

For example, Patent Literature 1 discloses a power storage device including an anode, a cathode, at least one separator provided between the anode and the cathode, an electrolyte, at least one thin film-shaped current collector which is in contact with at least one of the anode and the cathode, and at least one tab attached to the at least one thin film-shaped current collector, in which the tab is attached to the current collector through a connection means, the connection means electrically connects an exposed surface of the tab and the thin film-shaped current collector, any one of the anode and the cathode is interposed between at least a part of the thin film-shaped current collector and the separator, the current collector includes a conductive material that covers a non-conductive material substrate, and in an operation voltage of the power storage device, the current collector stops conduction during a short circuit, and the voltage is at least 2.0 volts.

In addition, Patent Literature 2 discloses a current collector having a multilayer structure in which an insulating layer is sandwiched between conductive layers, the current collector having a folded region in which an end portion of the current collector is folded back two or more times in the same direction, in which the conductive layers sandwiching the insulating layer in the folded region are electrically connected to each other, and inner surfaces of a current collector end portion forming the folded region are spaced apart from each other or partially in contact with each other.

In addition, Patent Literature 3 discloses a lithium-ion secondary battery including a positive electrode and a negative electrode, each of which is formed by attaching an active material to a current collector through a binder, in which at least one of the current collectors of the positive electrode and the negative electrode includes a low melting point layer consisting of a resin that melts during abnormal heat generation of the battery, and a metal layer interposed between the low melting point layer and the active material and exchanging charges with the active material. **Citation List**

### Patent Literatures

Patent Literature 1: PCT Japanese Translation Patent Publication No. 2022-527140
Patent Literature 2: Japanese Patent Application Laid-Open No. 2013-016321
Patent Literature 3: Japanese Patent Application Laid-Open No. H11-102711

### Summary of Invention

### Technical Problem

In the related art, an aluminum foil or an aluminum alloy foil may be used in a positive electrode in order to ensure conductivity and corrosion resistance. On the other hand, from the viewpoint of safety and lightness, a current collector film in which a metal layer is formed on both surfaces of a resin film is also often used in such current collectors as described in Patent Literatures 1 to 3. By the way, when a plurality of current collector leads consisting of such a current collector film is welded to a tab, the cycle characteristics of a lithium secondary battery may be deteriorated due to the welding strength of a welded portion, the connection resistance, or the like, and further, the temperature of the tab may increase during charging/discharging.

The present invention has been made in view of the above circumstances, and an object of the present invention is to provide a lithium secondary battery having excellent cycle characteristics and excellent temperature stability of a tab when the current collector film is subjected to ultrasonic welding.

### Solution to Problem

A lithium secondary battery according to one embodiment of the present invention includes a laminate including a plurality of positive electrodes, a plurality of separators, and a plurality of negative electrodes, a plurality of positive electrode tab lead portions extending from the laminate, and a positive electrode tab joined to the plurality of positive electrode tab lead portions, in which the positive electrode tab lead portion is a lead portion in which a positive electrode current collector constituting the positive electrode extends from the laminate, the positive electrode tab lead portion and the positive electrode current collector include a resin layer and an aluminum layer formed on both surfaces of the resin layer, in a 2θ pattern of an X-ray diffraction measurement of the aluminum layer, there is a peak A at least at 38.0° or more and 39.0° or less, a ratio (B/A) of an intensity of a peak B at 44.0° or more and 45.0° or less to an intensity of the peak A is 0.4 or less, and a half-value width of the peak A is 0.4° or less.

### Advantageous Effect of Invention

According to the present invention, it is possible to provide a lithium secondary battery having excellent cycle characteristics and excellent temperature stability of a tab.

### Brief Description of Drawings

[Figure 1] Figure 1 is a schematic view illustrating an example of a lithium secondary battery according to the present invention.
[Figure 2] Figure 2 is a schematic view illustrating an example of a positive electrode according to the present invention.
[Figure 3] Figure 3 is a schematic view illustrating an example of a cross section of the positive electrode according to the present invention.
[Figure 4] Figure 4 is a schematic view illustrating an example of joining of the positive electrode lead portion and the positive electrode tab in the lithium secondary battery according to the present invention.
[Figure 5] Figure 5 is a schematic view illustrating an example of joining of the positive electrode lead portion and the positive electrode tab in the lithium secondary battery according to the present invention.
[Figure 6] Figure 6 is a schematic view illustrating an example of joining of the positive electrode lead portion and the positive electrode tab in the lithium secondary battery according to the present invention.
[Figure 7] Figure 7 is a schematic view illustrating an example of the lithium secondary battery according to the present invention.
[Figure 8] Figure 8 illustrates a 2θ pattern of an X-ray diffraction measurement of a positive electrode current collector film of Example 2.
[Figure 9] Figure 9 illustrates a 2θ pattern of an X-ray diffraction measurement of a positive electrode current collector film of Comparative Example 2.

### Description of Embodiments

Hereinafter, embodiments for carrying out the present invention (hereinafter, simply referred to as "the present embodiment") will be described in detail. However, the present invention is not limited to the following present embodiments. The present invention can be modified in various ways without departing from the gist thereof. It is noted that, in the drawings, the same elements will be denoted by the same reference numerals, and redundant descriptions thereof will be omitted. In addition, the positional relationship such as up, down, left, and right is based on the positional relationship illustrated in the drawings unless otherwise specified. Further, the dimensional ratios in the drawings are not limited to the illustrated ratios.

### 1. Lithium secondary battery

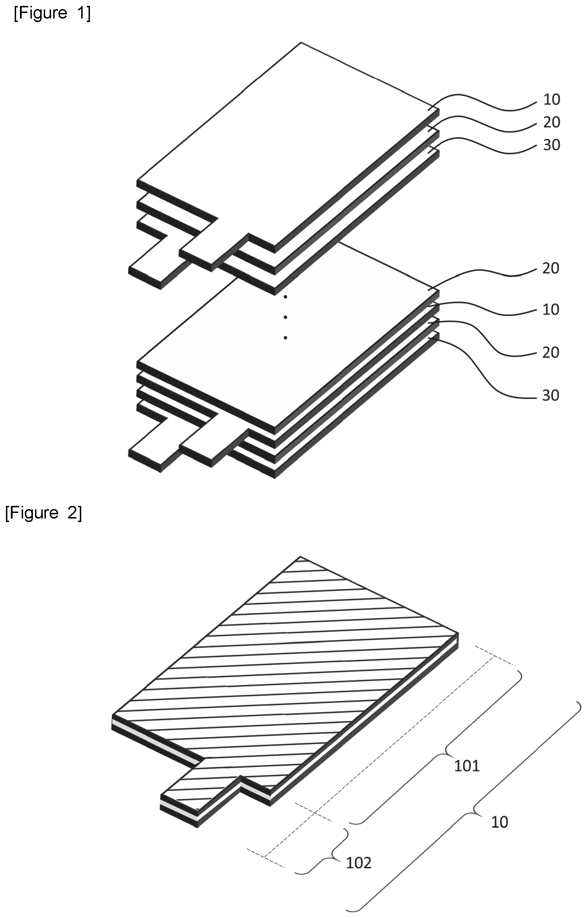

A basic configuration of a lithium secondary battery according to one embodiment of the present invention will be described with reference to Figure 1. As illustrated in Figure 1, the lithium secondary battery according to one embodiment of the present invention includes a plurality of positive electrodes 10, a plurality of separators 20, and a plurality of negative electrodes 30, and the positive electrode 10 and the negative electrode 30 are disposed to be spaced apart from each other with the separator 20 being interposed therebetween. Hereinafter, each configuration will be described in detail.

### 1.1. Positive electrode

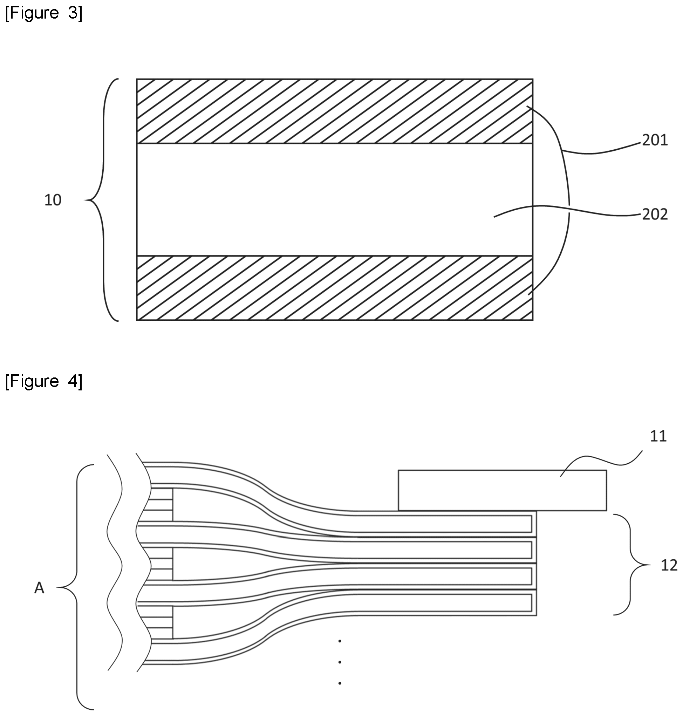

Figure 2 is a perspective view illustrating an example of the positive electrode 10 according to the present embodiment. As illustrated in Figure 2, the positive electrode 10 according to the present embodiment has a positive electrode body portion 101 and a positive electrode tab lead portion 102, and the positive electrode tab lead portion 102 has a form in which a positive electrode current collector constituting the positive electrode 10 extends from the positive electrode body portion 101. The positive electrode 10 includes a positive electrode current collector, and may further include a positive-electrode active material. In addition, as illustrated in Figure 3, when the positive electrode 10 according to the present embodiment consists of only the positive electrode current collector, the positive electrode 10 is composed of a positive electrode current collector film including a resin layer 202 and an aluminum (Al) layer 201 formed on both surfaces of the resin layer 202.

As illustrated in Figure 4, a positive electrode tab 11 is overlapped with a laminate 12 of positive electrode tab lead portions, which is obtained by collecting the positive electrode tab lead portions which are the positive electrode-side end portions of a battery laminate A, and is joined by welding. Examples of the welding method include ultrasonic welding, laser welding, resistance welding, or spot welding, and among these, in the lithium secondary battery according to the present embodiment, ultrasonic welding is suitable and preferable since it is necessary to weld the laminate including the resin layer 202.

The lithium secondary battery according to the present embodiment includes a plurality of positive electrodes 10, a plurality of positive electrode tab lead portions 102 extending from a laminate, and a positive electrode tab 11 joined to the plurality of positive electrode tab lead portions, in which the positive electrode tab lead portion 102 is a lead portion in which a body portion of a positive electrode current collector constituting the positive electrode 10 extends from the laminate, the positive electrode body portion and the positive electrode tab lead portion 102 of the positive electrode current collector include a resin layer 202 and an aluminum layer 201 formed on both surfaces of the resin layer 202, in a 2θ pattern of an X-ray diffraction measurement of the aluminum layer 201, there is a peak A at least at 38.0° or more and 39.0° or less, a ratio (B/A) of an intensity of a peak B at 44.0° or more and 45.0° or less to an intensity of the peak A is 0.4 or less, and a half-value width of the peak A is 0.4° or less.

In a lithium secondary battery configured as a laminate in which each constitutional element is laminated, a laminate of a positive electrode is joined to a tab terminal from a positive electrode lead portion of each positive electrode current collector to be connected to the outside during charging/discharging. Here, as a method of joining the electrode lead portion to the tab terminal, ultrasonic welding, laser welding, resistance welding, spot welding, or the like is used, and when a current collector film including the resin layer 202 and the aluminum layers 201 formed on both surfaces of the resin layer 202 is used, ultrasonic welding is often used since energization does not occur in the resin layer 202.

By the way, the inventors of the present invention have confirmed that, even when ultrasonic welding is carried out under the same conditions, the connection resistance increases due to a cause such as partial welding depending on the specifications of the current collector film, and there is room for improvement in the performance of the lithium secondary battery and the temperature stability of the tab during charging/discharging. As a result of intensive studies on this point, it has been found that, in the 2θ pattern of the X-ray diffraction measurement of the aluminum layer 201, there is a peak A at least at 38.0° or more and 39.0° or less, a ratio (B/A) of an intensity of a peak B at 44.0° or more and 45.0° or less to an intensity of the peak A is 0.4 or less, and a half-value width of the peak A is 0.4° or less, the performance of the lithium secondary battery is improved, and the temperature stability of the tab during charging/discharging is also improved. The factor is presumed as follows; however, it is not limited thereto.

The peak A is a peak indicating the orientation of a (111) plane in the aluminum layer 201, and the peak B is a peak indicating the orientation of a (200) plane. When the ratio of the intensity of the peak B to the intensity of the peak A is 0.4 or less, and the half-value width of the peak A is 0.4° or less, the orientation and crystallinity of the (111) plane are maximized while the orientation of the (200) plane is suppressed. Since the (111) plane is a slip plane of aluminum having a face-centered cubic lattice structure, shear deformation or plastic deformation is likely to occur, and it is presumed that this causes an advantage in welding by transverse vibration of ultrasonic waves, and the connection resistance between the positive electrode tab 11 and the positive electrode tab lead portion 102 is reduced. Therefore, it is considered that the lithium secondary battery according to the present embodiment has excellent cycle characteristics and excellent temperature stability of the tab during charging/discharging as a result of the synergistic action of the above-described factors. However, the factor is not limited to the above-described factor.

In the present specification, the half-value width is a value of a width of 2θ at a height of exactly half of the maximum value of the peak in the 2θ pattern of the X-ray diffraction measurement, and in English, it is called Full Width at Half Maximum and is referred to as FWHM.

The positive electrode current collector according to the present embodiment includes the resin layer 202 and the aluminum layer 201 formed on both surfaces of the resin layer 202. Figure 3 is a schematic view illustrating an example of a cross section of the positive electrode 10 including the resin layer 202 and the aluminum layer 201 formed on both surfaces of the resin layer 202.

The average thickness of the positive electrode current collector film according to the present embodiment is preferably 3.5 µm or more and 13 µm or less, or 5.0 µm or more and 10 µm or less. By setting the thickness of the positive electrode current collector film within the above-described range, the ease of ultrasonic welding is improved, and the cycle characteristics of the battery and/or the temperature stability of the tab tend to be improved.

It is preferable that the resin layer 202 includes at least one selected from the group consisting of polyethylene terephthalate (PET), polypropylene, polyamide, acrylic resin, polycarbonate, polyethylene, polyvinyl chloride, and polystyrene. In addition, the resin layer 202 more preferably consists of polyethylene terephthalate or polypropylene. By using the above-described resin layer 202, the ease of ultrasonic welding is improved, and the cycle characteristics of the battery and/or the temperature stability of the tab tend to be improved.

The resin layer 202 preferably has a film shape (sheet shape), and the average thickness thereof is preferably 3.0 µm or more and 10 µm or less, or 4.0 µm or more and 7.0 µm or less. By setting the thickness of the resin layer 202 within the above-described range, the ease of ultrasonic welding is improved, and the cycle characteristics of the battery and/or the temperature stability of the tab tend to be improved.

In the positive electrode current collector according to the present embodiment, the aluminum (Al) layer 201 is formed as a conductive layer on both surfaces of the resin layer 202. The aluminum layer 201 according to the present embodiment refers to a layer in which the content of the Al element in the layer is 99% by mass or more, 99.9% by mass or more, 99.99% by mass or more, or 99.9999% by mass or more.

In the 2θ pattern of the X-ray diffraction measurement of the aluminum layer 201, a peak A is provided at least at 38.0° or more and 39.0° or less; however, the peak A may be provided at 38.1° or more and 38.9° or less, or 38.2° or more and 38.8° or less. The fact that the aluminum layer 201 has the peak A means that the (111) plane is formed. In addition, in the aluminum layer 201, the half-value width of the peak A is 0.4° or less, preferably 0.3° or less, more preferably 0.2° or less, and still more preferably 0.15° or less. The fact that the half-value width is within this range means that the crystallinity of the (111) crystal plane is high, and when a positive electrode current collector including the aluminum layer 201 exhibiting such orientation and crystallinity is used, the cycle characteristics of the battery and the temperature stability of the tab are improved. It is noted that the half-value width of the peak A may be 0.01° or more, 0.05° or more, or may be 0.1° or more.

In addition, in the 2θ pattern of the aluminum layer 201, a ratio (B/A) of the intensity of the peak B at 44.0° or more and 45.0° or less to the intensity of the peak A is 0.4 or less, preferably 0.35 or less, more preferably 0.3 or less, still more preferably 0.2 or less, even still more preferably 0.15 or less, and particularly preferably 0.1 or less. The fact that the intensity ratio (B/A) is 0.4 or less means that the orientation of the (111) plane is extremely superior to the orientation of the (200) plane, and when a positive electrode current collector including the aluminum layer 201 exhibiting such orientation is used, the cycle characteristics of the battery and the temperature stability of the tab are improved. It is noted that the position of the peak B may be 44.1° or more and 44.9° or less, or may be 44.2° or more and 44.8° or less.

In the aluminum layer 201, the half-value width of the peak B is preferably 0.3° or less, 0.2° or less, or 0.1° or less. When the half-value width of the peak B is within the above-described range, the cycle characteristics of the battery and the temperature stability of the tab tend to be further improved. In addition, the half-value width of the peak B may be 0.01° or more, or may be 0.05° or more.

In the aluminum layer 201, a ratio (C/A) of the intensity of a peak C at 64.6° or more and 65.6° or less to the intensity of the peak A is preferably 0.2 or less, more preferably 0.1 or less, still more preferably 0.05 or less, and even still more preferably 0.03 or less. The fact that the intensity ratio (C/A) is 0.2 or less means that the orientation of the (111) plane is extremely superior to the orientation of the (220) plane, and when a positive electrode current collector including the aluminum layer 201 exhibiting such orientation is used, the cycle characteristics of the battery and the temperature stability of the tab are improved. It is noted that the position of the peak C may be 64.7° or more and 65.5° or less, or may be 64.8° or more and 65.4° or less.

It is noted that the X-ray diffraction measurement may be carried out by a known method in the related art using a commercially available X-ray diffraction measurement device. For example, it is considered to carry out the measurement using "RINT-Ultima" (X-ray diffraction device) manufactured by Rigaku Corporation, with CuKα rays as an X-ray source.

The average thickness per layer of the aluminum layer 201 is preferably 0.2 µm or more and 10 µm or less, 0.3 µm or more and 5.0 µm or less, 0.5 µm or more and 3.0 µm or less, or 0.8 µm or more and 2.0 µm or less. When the thickness per layer of the aluminum layer 201 is within the above-described range, the cycle characteristics of the battery and/or the temperature stability of the tab tend to be improved.

In the present embodiment, the average thickness of each layer is calculated by determining an arithmetic mean of measured values obtained by cutting the layer in a thickness direction, observing an exposed cross section with an SEM, and carrying out measurement three or more times, preferably five or ten or more times.

In the positive electrode current collector film according to the present embodiment, a ratio of the total thickness of the aluminum layer 201 to the thickness of the resin layer 202 is preferably 0.1 or more and 1.0 or less, 0.2 or more and 0.6 or less, or 0.3 or more and 0.5 or less. When the ratio of the thickness of the aluminum layer 201 to the thickness of the resin layer 202 is within the above-described range, the cycle characteristics of the battery and/or the temperature stability of the tab tend to be improved.

A method of producing the positive electrode current collector film according to the present embodiment is not particularly limited as long as a current collector film having the above-described characteristics can be obtained, and for example, the positive electrode current collector film may be produced by a known method in the related art. Examples of the known method include a method of forming the aluminum layer 201 by carrying out vapor deposition or sputtering on both surfaces of a base film (resin sheet) serving as the resin layer 202, and a vapor deposition method is preferable.

In this case, for example, when carrying out vapor deposition, the orientation of the (111) plane can be further enhanced by not making the degree of vacuum too high, and for example, the pressure is preferably 1 x 10⁻² Pa or more, the pressure is more preferably 1 x 10⁻² Pa or more and 5 x 10⁻¹ Pa or less, and the pressure is still more preferably 5 x 10⁻² Pa or more and 5 x 10⁻¹ Pa or less. In addition, when processing such as rolling is carried out after the aluminum layer 201 is formed, the orientation of the (111) plane tends to be reduced, and thus it is preferable not to carry out a process of processing such as rolling after the aluminum layer 201 is formed. Similarly, when a battery is produced using the positive electrode current collector film according to the present embodiment, the orientation of the aluminum layer tends to change.

Further, for example, when the temperature of the substrate is increased when carrying out vapor deposition, the crystallinity of the obtained aluminum layer 201 tends to be improved. The temperature is, for example, 50°C or higher, and in consideration of the heat resistance temperature of the base film to be used, the temperature is preferably 50°C or higher and 200°C or lower, or preferably 50°C or higher and 150°C or lower.

When forming the aluminum layer 201, one layer of the aluminum layer 201 having a desired thickness may be formed at once, or one layer of the aluminum layer 201 having a desired thickness may be formed by carrying out vapor deposition or sputtering a plurality of times.

It is noted that, as the positive electrode current collector film according to the present embodiment, a produced product may be used.

The positive-electrode active material is a material that causes an electrode reaction, that is, an oxidation reaction and a reduction reaction, in the positive electrode 10. The positive-electrode active material according to the present embodiment is not particularly limited, and for example, the positive-electrode active material is contained in a positive-electrode active material composition containing a binder, a conductive auxiliary agent, a positive-electrode sacrificial agent, and other additives, and the positive-electrode active material composition is applied onto at least one surface or both surfaces of the positive electrode current collector and subjected to press molding to dispose the positive-electrode active material layer on at least one surface or both surfaces of the positive electrode current collector.

The method of disposing the positive-electrode active material layer on the positive electrode current collector is not limited to press molding, and examples thereof include a method of curing the positive-electrode active material composition by heating the positive-electrode active material composition containing a thermosetting compound, a method of curing the positive-electrode active material composition by irradiating the positive-electrode active material composition containing a photocurable compound with light, and a method of curing the positive-electrode active material composition by subjecting the positive-electrode active material composition to two-liquid mixing as a two-liquid curable composition.

The positive-electrode active material layer according to the present embodiment may contain one or more compounds represented by General Formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B).

In addition, preferably, the positive-electrode active material layer contains one or more compounds represented by General Formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B). By containing the above-described compound having a high nickel ratio as the positive-electrode active material, the energy density of the lithium secondary battery tends to be further improved. In addition, when the nickel ratio is increased, the redox shuttle reaction is more likely to occur; however, the reaction is suppressed when the electrolyte solution contains the additive described in detail below, and the excellent performance stability at a high temperature tends to be exhibited.

The positive-electrode active material may contain other positive-electrode active materials in addition to the above-described compound. Specifically, examples of the other positive-electrode active materials according to the present embodiment include a host material for a lithium element (typically, a lithium ion). Such other positive-electrode active materials are not particularly limited, and examples thereof include a metal oxide and a metal phosphate. The metal oxide is not particularly limited, and examples thereof include a cobalt oxide-based compound, a manganese oxide-based compound, and a nickel oxide-based compound. The metal phosphate is not particularly limited, and examples thereof include an iron phosphate-based compound and a cobalt phosphate-based compound. Typical examples of the other positive-electrode active materials include LiCoO₂, LiNiₓMn_{y}O (x + y = 1), LiNiO₂, LiMn₂O₄, LiFePO, LiCoPO, LiFeOF, LiNiOF, and TiS₂. The other positive-electrode active materials may be used alone or in a combination of two or more types thereof.

The positive-electrode active material composition may contain a binder. When the binder is contained, the positive-electrode active material layer is easily bound to the positive electrode current collector, and the flexibility is improved after the positive-electrode active material layer is disposed on the positive electrode current collector.

The binder according to the present embodiment is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; and a polyimide resin. The binder may be used alone or in a combination of two or more types thereof.

The positive-electrode active material composition according to the present embodiment may contain a positive-electrode sacrificial agent. The positive-electrode sacrificial agent according to the present embodiment is a lithium-containing compound that causes an oxidation reaction in a charge/discharge potential range of the positive-electrode active material and substantially does not cause a reduction reaction. The positive-electrode sacrificial agent is not particularly limited, and examples thereof include a lithium oxide such as Li₂O₂; a lithium nitride such as Li₃N; a lithium sulfide-based solid solution such as Li₂S-P₂S₅, Li₂S-LiCl, Li₂S-LiBr, or Li₂S-LiI; and an iron-based lithium oxide such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05 ≤ z ≤ 0.95), or Li₅FeO₄. The positive-electrode sacrificial agent may be used alone or in a combination of two or more types thereof.

### 1.2. Positive electrode tab

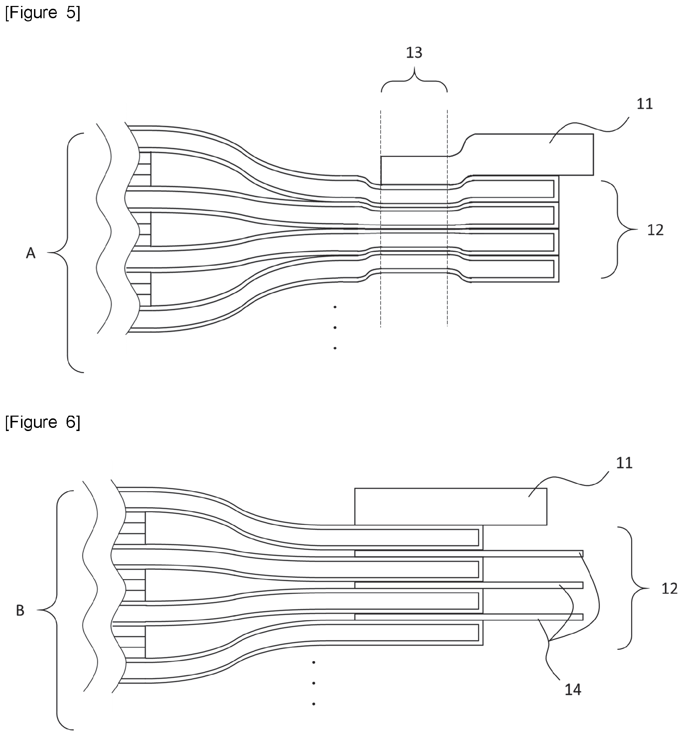

When the positive electrode tab 11 and the laminate 12 of the positive electrode tab lead portions are joined by ultrasonic welding, the ultrasonic welding may be carried out while carrying out pressurization. When the ultrasonic welding is carried out while carrying out pressurization, for example, as illustrated in Figure 5, heat is generated in a positive electrode tab joining portion 13, and the portion of the positive electrode tab joining portion 13 tends to be thinner.

The positive electrode tab 11 may be formed of, for example, at least one material selected from the group consisting of aluminum, titanium, stainless steel, nickel, and alloys thereof. The positive electrode tab 11 is preferably formed of at least one material selected from the group consisting of aluminum, nickel, and alloys thereof, and more preferably formed of aluminum or an aluminum alloy.

As illustrated in Figure 6, it is preferable that the positive electrode tab 11 is overlapped with the laminate 12 of the positive electrode tab lead portions obtained by collecting the positive electrode tab lead portions 102 with the auxiliary metal foils 14 being sandwiched therebetween, which are the positive electrode-side end portions of the battery laminate B, and is joined by welding. By sandwiching the auxiliary metal foil 14, the thickness of the aluminum layer 201 which is thinned by the ultrasonic welding can be replenished, and the conductivity tends to be easily maintained. The auxiliary metal foil 14 is not particularly limited, and examples thereof include an aluminum foil and an aluminum alloy foil.

The thickness of the positive electrode tab 11 is preferably 0.1 mm or more and 0.8 mm or less, 0.15 mm or more and 0.5 mm or less, or 0.2 mm or more and 0.4 mm or less. By setting the thickness of the positive electrode tab 11 within the above-described range, the cycle characteristics of the lithium secondary battery and the temperature stability of the tab tend to be further improved.

### 1.3. Separator

The separator 20 according to the present embodiment is not particularly limited as long as it has a function of physically and/or electrically isolating the positive electrode 10 and the negative electrode 30 and a function of ensuring ionic conductivity of lithium ions. Examples of such a separator include an insulating porous member, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator 20, one type of member may be used alone, or two or more types of members may be used in combination.

As the separator 20, the insulating porous member, the polymer electrolyte, or the gel electrolyte is preferably used alone or in a combination of two or more types thereof. It is noted that, when the insulating porous member is used alone as the separator 20, the lithium secondary battery needs to further include an electrolyte solution.

The above-described polymer electrolyte is not particularly limited, and examples thereof include a solid polymer electrolyte mainly including a polymer and an electrolyte, and a semi-solid polymer electrolyte mainly including a polymer, an electrolyte, and a plasticizer.

The above-described gel electrolyte is not particularly limited, and examples thereof include a gel electrolyte mainly including a polymer and a liquid electrolyte (that is, a solvent and an electrolyte).

The polymer that can be included in the polymer electrolyte and the gel electrolyte is not particularly limited, and examples thereof include a polymer including a functional group including an oxygen atom, such as an ether and an ester, a halogen group, and a polar group such as a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, and polytetrafluoroethylene. Such a resin as described above may be used alone or in a combination of two or more types thereof.

Examples of the electrolytes included in the polymer electrolyte and the gel electrolyte include salts of Li, Na, K, Ca, Mg, and the like. Typically, in the present embodiment, the polymer electrolyte and the gel electrolyte include a lithium salt. The lithium salt is not particularly limited, and may be any lithium salt which can be contained in the electrolyte solution described below. Such a salt or lithium salt may be used alone or in a combination of two or more types thereof.

A blending ratio of the polymer and the lithium salt in the polymer electrolyte and the gel electrolyte may be determined by a ratio of the polar group included in the polymer to the lithium atom included in the lithium salt. For example, when the polymer has an oxygen atom, the blending ratio may be determined by a ratio ([Li]/[O]) of the number of lithium atoms included in the lithium salt to the number of oxygen atoms included in the polymer. In the polymer electrolyte and the gel electrolyte, the blending ratio of the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent contained in the gel electrolyte is not particularly limited, and for example, one type of solvent that can be included in the electrolyte solution described below can be used alone, or two or more types thereof can be used in combination. Preferred examples of the solvent are also the same as those in the electrolyte solution described below.

The plasticizer contained in the semi-solid polymer electrolyte is not particularly limited, and examples thereof include the same components as the solvents that can be contained in the gel electrolyte, and various oligomers.

When the separator 20 includes an insulating porous member, the pores of the member are filled with a substance having ionic conductivity, whereby the member exhibits ionic conductivity. As a result, in the present embodiment, the pores thereof are filled with, for example, the electrolyte solution according to the present embodiment, the gel electrolyte including the electrolyte solution according to the present embodiment, or the like.

The material constituting the insulating porous member is not particularly limited, and examples thereof include an insulating polymer material. Specific examples thereof include polyethylene (PE) and polypropylene (PP). That is, the separator 20 may be a porous polyethylene (PE) film, a porous polypropylene (PP) film, or a laminated structure thereof.

### 1.4. Negative electrode

The negative electrode 30 according to the present embodiment includes a negative electrode current collector and, as necessary, a negative-electrode active material layer. The lithium secondary battery according to the present embodiment may be an anode-free battery that substantially does not contain a negative-electrode active material, or may contain a negative-electrode active material. The anode-free lithium secondary battery consists of a negative electrode current collector since the negative electrode 30 does not have a negative-electrode active material. After the initial charging, a lithium metal is deposited on the negative electrode 30, and the deposited lithium metal is electrolytically dissolved to carry out charging/discharging. As a result, the anode-free battery has an advantage that the energy density is theoretically high since the volume occupied by the negative-electrode active material and the mass of the negative-electrode active material are reduced, and the volume and mass of the entire battery are reduced.

The negative electrode current collector may have a positive electrode current collector film including a resin layer containing polyethylene terephthalate (PET), polypropylene, or the like, and metal layers provided on both surfaces of the resin layer, or the negative electrode current collector may have only the metal layer without having the resin layer. When the negative electrode current collector film is provided, the metal layer is formed by carrying out bonding on the surfaces on both sides of the resin layer by vapor deposition, sputtering, electroplating, an adhesive, or the like.

The resin layer of the negative electrode current collector is an insulator, and prevents the metal layers provided on both surfaces of the resin layer from being conductive to each other. The resin constituting the resin layer is not particularly limited, and may be composed of, for example, a sheet-shaped (film-shaped) or fibrous resin. The resin may include at least one selected from the group consisting of polyethylene terephthalate (PET), polypropylene, polyamide, acrylic resin, polycarbonate, polyethylene, polyvinyl chloride, and polystyrene. The above-described resin may be used alone or in a combination of two or more types thereof.

The resin layer of the negative electrode current collector may appropriately contain other additives according to desired physical properties, in addition to the above-described resin. The additive is not particularly limited, and examples thereof include a coloring agent, a flame retardant, and a surfactant.

When the negative electrode current collector has the negative electrode current collector film, the thickness of the metal layer is not particularly limited, and is, for example, 0.1 µm or more and 4.0 µm or less, 0.2 µm or more and 3.0 µm or less, 0.3 µm or more and 2.5 µm or less, or 0.4 µm or more and 2.0 µm or less.

When the negative electrode current collector has the metal layer without having the resin layer, the thickness of the metal layer is not particularly limited, and is, for example, 4.0 µm or more and 20.0 µm or less, 6.0 µm or more and 17.5 µm or less, or 8.0 µm or more and 15.0 µm or less.

The average thickness of the negative electrode 30 is not particularly limited, and is, for example, 20 µm or more and 100 µm or less, 30 µm or more and 80 µm or less, or 40 µm or more and 70 µm or less. However, the average thickness of the negative electrode 30 can be appropriately adjusted according to the desired capacity of the battery and the like.

The negative-electrode active material is a material that causes an electrode reaction, that is, an oxidation reaction and a reduction reaction, in the negative electrode 10. The negative-electrode active material according to the present embodiment is not particularly limited, and for example, the negative-electrode active material is contained in a negative-electrode active material composition containing a binder, a conductive auxiliary agent, a negative-electrode sacrificial agent, and other additives, and the negative-electrode active material composition is applied onto at least one surface or both surfaces of the negative electrode current collector and subjected to press molding to dispose the negative-electrode active material layer on at least one surface or both surfaces of the negative electrode current collector.

The negative-electrode active material is not particularly limited, and examples thereof include a lithium metal, an alloy containing a lithium metal, a carbon-based substance, a metal oxide, a metal to be alloyed with lithium, and an alloy containing the metal. The carbon-based substance is not particularly limited, and examples thereof include graphene, graphite, hard carbon, and carbon nanotube. The metal oxide is not particularly limited, and examples thereof include a titanium oxide-based compound and a cobalt oxide-based compound. The metal to be alloyed with lithium is not particularly limited, and examples thereof include silicon, germanium, tin, lead, aluminum, and gallium.

### 1.5. Negative electrode tab

The negative electrode tab may be formed of, for example, at least one material selected from the group consisting of copper, titanium, stainless steel, nickel, and alloys thereof. The negative electrode tab is preferably formed of at least one material selected from the group consisting of copper, nickel, and alloys thereof, and more preferably copper plated with nickel.

The thickness of the negative electrode tab is preferably 0.1 mm or more and 0.5 mm or less, or 0.2 mm or more and 0.4 mm or less. By setting the thickness of the negative electrode tab 11 within the above-described range, the cycle characteristics of the lithium secondary battery and the temperature stability of the tab tend to be further improved.

### 1.6. Electrolyte solution

The lithium secondary battery may contain an electrolyte solution. The electrolyte solution is a liquid containing a solvent and an electrolyte, and has ionic conductivity. The electrolyte solution may be referred to as a liquid electrolyte and acts as a conduction path for lithium ions. Therefore, when the lithium secondary battery has the electrolyte solution, the internal resistance is reduced, and the energy density, the capacity, and the cycle characteristics can be improved.

The electrolyte solution is, for example, a solution with which a housing (pouch) of the lithium secondary battery is filled. In addition, the electrolyte solution may be infiltrated into the separator 20, and may constitute a polymer electrolyte or a gel electrolyte by being held in a polymer.

The electrolyte contained in the electrolyte solution may be any lithium salt. The lithium salt may be, for example, one type or a combination of two or more types selected from the group consisting of LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄.

As the solvent contained in the electrolyte solution, for example, a non-aqueous solvent having a fluorine atom (hereinafter, referred to as "fluorinated solvent") and a non-aqueous solvent having no fluorine atom (hereinafter, referred to as "non-fluorine solvent") may be added.

Examples of the fluorinated solvent include 1,1,2,2-tetrafluoroethyl-2,2,3,3-tetrafluoropropyl ether, 1,1,2,2-tetrafluoroethyl-2,2,2-trifluoroethyl ether, and 1H,1H,5H-octafluoropentyl-1,1,2,2-tetrafluoroethyl ether.

Examples of the non-fluorine solvent include triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

The fluorinated solvent and/or the non-fluorine solvent may be used alone or in a combination of two or more types thereof at any ratio. The contents of the fluorinated solvent and the non-fluorine solvent are not particularly limited, and the proportion of the fluorinated solvent to the entire solvent may be 0% to 100% by volume, and the proportion of the non-fluorine solvent to the entire solvent may be 0% to 100% by volume.

### 2. Method for manufacturing lithium secondary battery

The method for manufacturing a lithium secondary battery is not particularly limited as long as it is a method capable of manufacturing a lithium secondary battery having the above-described configuration of the battery. Examples thereof include the following method.

The above-described positive electrode 10, separator 20, and negative electrode 30 are prepared. Each of the constitutional members or the reagent or the like used for the members may be manufactured by a known method in the related art, or a commercially available product may be used. The positive electrode 10, the separator 20, and the negative electrode 30 prepared as described above are laminated in this order so that the positive electrode 10 and the separator 20 face each other, thereby obtaining a laminate. The obtained laminate can be sealed in a sealing container together with the electrolyte solution to obtain a lithium secondary battery. The sealing container is not particularly limited, and examples thereof include a laminated film.

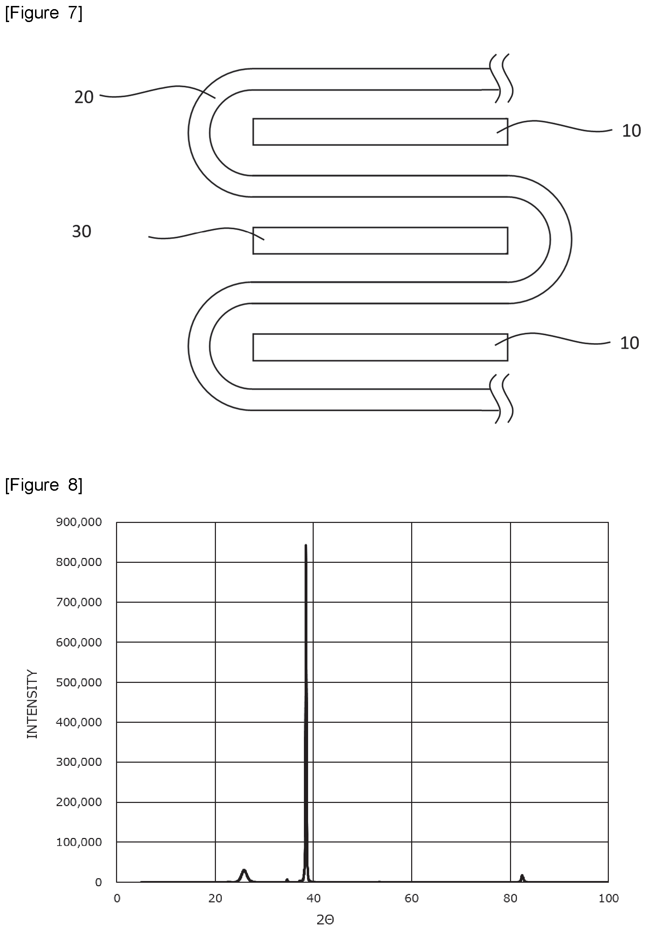

In addition, as illustrated in Figure 1, the plurality of positive electrodes 10 and the plurality of negative electrodes 30 may be alternately laminated with the separator 20 being sandwiched between the positive electrode 10 and the negative electrode 30, and as a result, the battery performance such as the energy density tends to be further improved. As the lamination method, for example, as illustrated in Figure 7, the positive electrode 10 and the negative electrode 30 may be wrapped to face the opposite side of the separator 20 without being in contact with each other, and the separator 20 may be laminated without being cut. Such lamination is preferable from the viewpoint of preventing a short circuit and improving productivity.

When producing a lithium ion battery, the lithium ion battery may be produced in the same manner as the above-described method for manufacturing the battery, except that a host material for a lithium element is used for the negative electrode 30. A method for manufacturing the negative electrode 30 having such a host material (negative-electrode active material) is not particularly limited, and is, for example, as follows. As necessary, the above-described negative-electrode active material, a binder described in detail below, a conductive auxiliary agent, and other additives are mixed to obtain a negative-electrode active material composition. The negative-electrode active material or the obtained negative-electrode active material composition is applied onto both surfaces or one surface of the negative electrode current collector and subjected to press molding to form a negative-electrode active material layer on both surfaces or one surface of the negative electrode current collector, thereby obtaining a molded body. The obtained molded body is punched into a predetermined size by punching processing to obtain the negative electrode 30.

The lithium secondary battery according to the present embodiment can be an anode-free lithium battery, a lithium ion battery, a lithium metal battery, a lithium sulfur battery, a lithium oxygen battery, or a lithium air battery by changing the additional configuration or the member used for each configuration, and among these, the configuration of the anode-free lithium battery, the lithium ion battery, or the lithium metal battery is particularly suitable.

The shape of the battery of the lithium secondary battery according to the present embodiment is not particularly limited, and may be, for example, a sheet type, a laminated sheet type, or may have a thin shape, a bottomed cylindrical shape, a bottomed angular shape, or the like. From the viewpoint of more effectively and reliably exhibiting the effect of the present embodiment, a sheet type, a laminated sheet type, or a thin shape is preferable.

### EXAMPLES

Hereinafter, the present invention will be described in more detail with reference to Examples. However, the present invention is not limited to these Examples.

### 1. Production of lithium secondary battery

Lithium-ion secondary batteries of Examples and Comparative Examples were prepared as follows.

### 1.1. Preparation of positive electrode

### 1.1.1. Preparation of positive electrode current collector

### (Example 1)

As a positive electrode current collector, a 6 µm polyethylene terephthalate (PET) film obtained by injection molding was set in a vapor deposition device, and a 1 µm aluminum thin film was formed on both surfaces of the PET film to obtain a current collector film. A positive-electrode active material layer of 60 µm was formed on both surfaces of the current collector film by a method described later, and the current collector film was cut out to have a size (4 cm x 4 cm) of a positive electrode body portion having a positive electrode tab lead of 0.5 cm x 3 cm, thereby obtaining a positive electrode having a thickness of 128 µm.

### (Example 2)

As a positive electrode current collector, a 6 µm PET film obtained by injection molding was set in a vapor deposition device, and a 1 µm aluminum thin film was formed on both surfaces of the PET film to obtain a current collector film. A positive-electrode active material layer was formed by a method described later, and cut out to be a negative electrode having the same size and shape as in Example 1, thereby obtaining a positive electrode. Figure 8 illustrates a 2θ pattern of an X-ray diffraction measurement carried out on this positive electrode current collector film.

### (Comparative Example 1)

As a positive electrode current collector, a 1 µm PET film obtained by injection molding was set in a vapor deposition device, and a 6 µm aluminum thin film was formed on both surfaces of the PET film to obtain a current collector film. A positive-electrode active material layer was formed by a method described later, and cut out to be a negative electrode having the same size and shape as in Example 1, thereby obtaining a positive electrode.

### (Comparative Example 2)

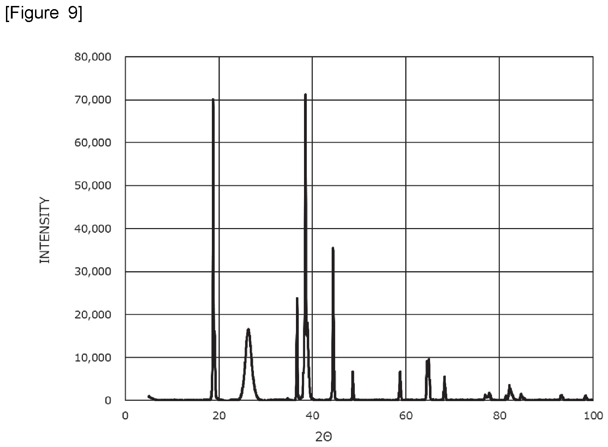

As a positive electrode current collector, a 1 µm PET film obtained by injection molding was set in a vapor deposition device, and a 6 µm aluminum thin film was formed on both surfaces of the PET film to obtain a current collector film. A positive-electrode active material layer was formed by a method described later, and cut out to be a negative electrode having the same size and shape as in Example 1, thereby obtaining a positive electrode. Figure 9 illustrates a 2θ pattern of an X-ray diffraction measurement carried out on this positive electrode current collector film.

The positive electrode current collector film obtained above was subjected to X-ray diffraction measurement using "RINT-Ultima" manufactured by Rigaku Corporation, and the detection of each peak and the calculation of the half-value width (FWHM) were carried out by software associated with "RINT-Ultima". The measurement conditions were as follows.

### <Conditions of X-ray diffraction measurement>

· Goniometer: Ultima IV (Protectus ADS)
· Attachment: Standard Sample Table
· Scanning Mode: 2Theta/Theta
· Scanning Type: Continuous Scanning
· X-Ray: 40 kV/40 mA
· Divergence Slit: 1/2°
· Divergence Vertical Restriction Slit: 10 mm
· Scattering Slit: 8 mm
· Light Receiving Slit: Open

### 1.1.2. Formation of positive-electrode active material layer

A positive-electrode active material composition was prepared by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent. This positive-electrode active material composition was applied onto a part of each of both surfaces of the positive electrode current collector at a weight per unit area of 15 mg/cm², and pressed to form a positive-electrode active material layer on both surfaces of the positive electrode current collector film, thereby obtaining a molded body. In this molded body, a portion where the positive-electrode active material layer was formed was cut out to be a positive electrode current collector portion, and a portion where the positive-electrode active material layer was not formed was cut out to be a positive electrode lead portion, thereby obtaining a positive electrode of each example.

### 1.2. Preparation of negative electrode

As a negative electrode current collector, a current collector film in which copper as a metal layer was subjected to vapor deposition to a thickness of 1.0 µm on both surfaces of a PET film having a thickness of 6.0 µm as a resin layer was used. Then, a negative-electrode active material composition was prepared by mixing 97.0 parts by mass of graphite as a negative-electrode active material, 0.5 parts by mass of carbon black as a conductive auxiliary agent, and 1.5 parts by mass of carboxymethyl cellulose (CMC) and 1.0 parts by mass of styrene-butadiene rubber (SBR) as binders in water as a solvent. The negative-electrode active material composition was applied and pressed onto a part of each of both surfaces of the negative electrode current collector films obtained above so that the weight per unit area was individually 15 mg/cm², thereby forming a negative-electrode active material layer on both surfaces of the negative electrode current collector. In this molded body, a portion where the negative-electrode active material layer was formed was cut out to be a negative electrode current collector portion, and a portion where the negative-electrode active material layer was not formed was cut out to be a negative electrode lead portion, thereby obtaining the negative electrode 30 having a predetermined size (4 cm x 4 cm).

### 1.3. Preparation of separator

A sheet (thickness: 15 µm, 4 cm x 4 cm) of a polyethylene microporous membrane having a surface coated with a mixture of polyvinylidene fluoride (PVDF) and Al₂O₃ was prepared as the separator 20.

### 1.4. Preparation of electrolyte solution

Lithium hexafluorophosphate (LiPF₆) was dissolved in a solvent obtained by mixing ethylene carbonate (EC) and dimethyl carbonate (DMC) at a volume ratio of 3:7 at a concentration of 1 M. In addition, lithium difluorophosphate (LiPO₂F₂) and vinylene carbonate (VC) were added to the solvent so that the content ratios with respect to the total amount of the solvent (the total mass of EC and DMC not including LiPF₆) were 1% by mass and 2% by mass, respectively. As described above, an electrolyte solution was prepared.

### 1.5. Assembly of battery

A laminate was obtained by laminating the positive electrode 10, the separator 20, and the negative electrode 30, which were obtained as described above, in this order a plurality of times so that the negative electrode 30 faced the separator 20 as illustrated in Figure 1. Then, the lead portions of each of the laminated positive electrode and negative electrode were joined by ultrasonic welding to an Al terminal of 100 µm for the positive electrode and a Ni terminal of 100 µm for the negative electrode, and the joined lead portions were inserted into a laminated exterior body. Next, the electrolyte solution obtained above was injected into the exterior body and sealed to obtain a lithium-ion secondary battery of each of Examples and Comparative Examples.

### 2. Evaluation of lithium secondary battery

### 2.1. Rate capability

The lithium secondary battery obtained above was subjected to initial CC charging to 4.2 V at a charging rate of 0.1 C in an environment of 25°C, and then subjected to initial CC discharging to 3.0 V at a discharging rate of 0.1 C. In addition, CC charging was carried out again to 4.2 V at 0.1 C, and CC discharging was carried out at 3 C after the completion of the charging. The ratio of the discharge capacity at a discharging rate of 3.0 C to the value of the initial discharge capacity (discharging rate at 0.1 C), which was obtained as described above, was calculated as a rate capability (%).

### 2.2. Tab temperature during energization

Each of the lithium secondary batteries for which the rate capability was measured was subjected to CC charging again to 4.2 V at a charging rate of 0.1 C, and then subjected to CC discharging to 2.5 V at a rate of 10 C. After the completion of the discharge, the temperature (°C) of the central portion of the positive electrode tab was measured after 2 minutes had elapsed. It can be said that the tab temperature stability is excellent since a lower tab temperature means less heat generation.

**[Table 1]**

| | FWHM (°) of peak A | Intensity ratio (B/A) | Rate capability (%) | Tab temperature (°C) during energization |
|---|---|---|---|---|
| Example 1 | 0.3 | 0.15 | 88 | 45 |
| Example 2 | 0.3 | 0 | 90 | 40 |
| Comparative Example 1 | 0.5 | 0.15 | 65 | 65 |
| Comparative Example 2 | 0.3 | 0.5 | 70 | 60 |

As shown in Table 1, it has been confirmed that in Example 1 and Example 2 which include a laminate including a plurality of positive electrodes, a plurality of separators, and a plurality of negative electrodes, a plurality of positive electrode tab lead portions extending from the laminate, and a positive electrode tab joined to the plurality of positive electrode tab lead portions, in which the positive electrode tab lead portion is a lead portion in which a positive electrode current collector constituting the positive electrode extends from the laminate, the positive electrode tab lead portion and the positive electrode current collector include a resin layer and an aluminum layer formed on both surfaces of the resin layer, in a 2θ pattern of an X-ray diffraction measurement of the aluminum layer, there is a peak A at least at 38.0° or more and 39.0° or less, a ratio (B/A) of an intensity of a peak B at 44.0° or more and 45.0° or less to an intensity of the peak A is 0.4 or less, and a half-value width of the peak A is 0.4° or less, the rate characteristics and the temperature stability of the tab during energization are excellent as compared with Comparative Example 1 and Comparative Example 2 in which the above-described configuration was not adopted.

### <Appendix>

The embodiment according to the present disclosure includes the following aspects.
[1] A lithium secondary battery including:
   a laminate including a plurality of positive electrodes, a plurality of separators, and a plurality of negative electrodes;
   a plurality of positive electrode tab lead portions extending from the laminate; and
   a positive electrode tab joined to the plurality of positive electrode tab lead portions,
   in which the positive electrode tab lead portion is a lead portion in which a positive electrode current collector constituting the positive electrode extends from the laminate,
   the positive electrode tab lead portion and the positive electrode current collector include a resin layer and an aluminum layer formed on both surfaces of the resin layer,
   in a 2θ pattern of an X-ray diffraction measurement of the aluminum layer, there is a peak A at least at 38.0° or more and 39.0° or less,
   a ratio (B/A) of an intensity of a peak B at 44.0° or more and 45.0° or less to an intensity of the peak A is 0.4 or less, and
   a half-value width of the peak A is 0.4° or less.
[2] The lithium secondary battery according to [1],
   in which an average thickness of the resin layer is 3.0 µm or more and 10.0 µm or less, and
   an average thickness of the aluminum layer is 0.5 µm or more and 3.0 µm or less.
[3] The lithium secondary battery according to [1] or [2],
   in which the resin layer includes at least one selected from the group consisting of polyethylene terephthalate, polypropylene, polyamide, acrylic resin, polycarbonate, polyethylene, polyvinyl chloride, and polystyrene.
[4] The lithium secondary battery according to any one of [1] to [3],
   in which the resin layer consists of polyethylene terephthalate or polypropylene.
[5] The lithium secondary battery according to any one of [1] to [4],
   in which the positive electrode tab lead portion is joined to the positive electrode tab by ultrasonic welding.

### Industrial Applicability

The lithium secondary battery according to the present invention has excellent cycle characteristics and temperature stability of the tab, and thus has industrial applicability as a power storage device used for various applications. **Reference Signs List**

A, B: battery laminate
10: positive electrode
11: positive electrode tab
12: laminate of positive electrode tab lead portion
13: positive electrode tab joining portion
14: auxiliary metal foil
20: separator
30: negative electrode
101: positive electrode body portion
102: positive electrode tab lead portion
201: aluminum layer
202: resin layer

## Claims

1. A lithium secondary battery comprising:
a laminate including a plurality of positive electrodes, a plurality of separators, and a plurality of negative electrodes;
a plurality of positive electrode tab lead portions extending from the laminate; and
a positive electrode tab joined to the plurality of positive electrode tab lead portions,
wherein the positive electrode tab lead portion is a lead portion in which a positive electrode current collector constituting the positive electrode extends from the laminate,
the positive electrode tab lead portion and the positive electrode current collector include a resin layer and an aluminum layer formed on both surfaces of the resin layer,
in a 2θ pattern of an X-ray diffraction measurement of the aluminum layer, there is a peak A at least at 38.0° or more and 39.0° or less,
a ratio (B/A) of an intensity of a peak B at 44.0° or more and 45.0° or less to an intensity of the peak A is 0.4 or less, and
a half-value width of the peak A is 0.4° or less.

2. The lithium secondary battery according to Claim 1,
wherein an average thickness of the resin layer is 3.0 µm or more and 10.0 µm or less, and
an average thickness of the aluminum layer is 0.5 µm or more and 3.0 µm or less.

3. The lithium secondary battery according to Claim 1, wherein the resin layer includes at least one selected from the group consisting of polyethylene terephthalate, polypropylene, polyamide, acrylic resin, polycarbonate, polyethylene, polyvinyl chloride, and polystyrene.

4. The lithium secondary battery according to Claim 1, wherein the resin layer consists of polyethylene terephthalate or polypropylene.

5. The lithium secondary battery according to Claim 1, wherein the positive electrode tab lead portion is joined to the positive electrode tab by ultrasonic welding.
